# EUROPEAN PATENT APPLICATION

(11) **EP 1 528 551 A2**
(43) Date of publication of application: **04.05.2005**
(21) Application number: 04025349.4
(22) Date of filing: 25.10.2004
(51) Int. Cl.: G11B 17/028

(54) **Disk device equipped with thin clamper**

(30) Priority: 30.10.2003 JP 2003370195; 19.03.2004 JP 2004080214
(71) Applicant: ORION ELECTRIC CO., Ltd., Takefu-shi, Fukui 915-8555 (JP)
(72) Inventor: Hara, Hirotoshi, Takefu-shi Fukui 915-8555 (JP); Kobayashi, Yuichi, Takefu-shi Fukui 915-8555 (JP)
(74) Representative: VOSSIUS & PARTNER

(57) **Abstract**

In order to realize reduction in thickness of a disk device including a turntable (1) and a clamper (3) in which a disk (2) is mounted on the turntable and pressed and clamped by the clamper by reducing height of the clamper, the clamper is constituted with a clamper body (10) integrally formed of synthetic resin, a magnet (6), and a clamper plate (20) made of a metal magnetic substance. The clamper body (10) has a disc-like clamp section (11) to press the disk, a cylindrical center guide (12) forming a housing space (15) for the magnet in a center thereof, a cylindrical outer ring (16) erected from the clamp section, and locking pieces (17) extending to inward from an upper part of the outer ring so as not to project over an upper end of the outer ring and an upper end of the center guide and being arranged at equal intervals in two or more places. The clamper plate (20) has hooks (23) extending below to engage with the locking pieces (17) respectively.

## Description

The present invention relates to a disk device in which a clamper to be used in clamping a disk mounted on a turntable is reduced in thickness.

A disk device reads signals recorded in a disk using an optical pickup. In this case, the disk is mounted on a turntable and clamped to rotate such that the optical pickup moves in a radial direction at a predetermined velocity. Since the turntable is directly connected to a spindle of a drive motor and rotates at a high velocity, if the disk is simply placed on the turntable and a hole in the center of the disk is fitted with a projection in the center of the turntable, the disk comes off during rotation or slippage occurs between the disk and the turntable to cause phase change in an angular velocity. Thus, in order to prevent such problems, the disk is clamped.

A clamper of a clamp mechanism is axially supported so as to rotate freely and rotates with the turntable. The clamper can rotate while clamping the disk mounted on the turntable. Here, a mechanism utilizing attraction of a magnet is adopted as clamp means of the clamper. In a technique for performing a clamp operation of a disk using the magnet, a magnetic substance to be attracted by the magnet is provided on the turntable side.

Incidentally, although the disk mounted on the turntable can rotate at a predetermined velocity without coming off by being clamped, a positional relation between the clamper and the turntable has to be accurate. If an unbalanced load occurs in the turntable or the clamper, unevenness in rotation and vibration are caused. When the disk is clamped utilizing attraction of the magnet, if there is backlash in a mechanism for holding the magnet, a position of the clamper with respect to the turntable deviates following the rotation of the disk. As a result, since the unevenness in rotation and the vibration increase, in order to prevent the occurrence of these phenomena, accuracy of a positional relation between a clamper plate and a clamper body of the clamp mechanism is increased to prevent locking pieces, which attach the clamper body to the clamper plate, from coming off.

As such a clamp mechanism, for example, "Chucking device for recording disk" according to JP-U-3059729 is known. This is a chucking device for nipping a recording disk in a vertical direction thereof. The chucking device includes: a center guide locked by a chucking holding member provided on a chassis side and holds the recording disk between a turntable for driving to rotate the disk and the center guide; and a yoke plate that is attached to the center guide and becomes a path for a magnet, which is magnetically coupled with a magnetic substance provided on the turntable, and a magnetic flux. The yoke plate (clamper plate) includes: an opening to be used for locking to a chucking holding section of the center guide and in which locking pieces formed at one end of the center guide fit to attach the yoke plate to the center guide; and a projection for making it impossible to attach the yoke plate from an opposite direction.

On the other hand, since the disk is mounted on the turntable and clamped by the clamper, height (thickness) of the clamper has to be reduced in order to reduce the disk device in thickness. In other words, a thin clamper is required. However, in the "Chucking device for recording disk" according to JP-U-3059729, the locking pieces project above the upper surface of the yoke plate (clamper plate), and a magnet is housed in the center guide. However, in order to obtain a large magnetic force (magnetic attraction), a magnet with a size enough for the purpose is required. Thus, since the height of the clamper is increased inevitably, it is difficult to reduce the disk device in thickness.

There are the problems as described above in reducing the conventional disk device in thickness. These are the problems that the invention is to solve. It is an object of the invention to provide a disk device including a thin clamper with reduced height that is constituted such that locking pieces do not project above.

A disk device equipped with a thin damper according to the invention comprises a turntable and a clamper in which a disk is mounted on the turntable and pressed and clamped by the clamper, wherein the clamper including a clamper body integrally formed of synthetic resin, a magnet, and a clamper plate made of a metal magnetic substance, the clamper body having a disc-like clamp section to press the disk, a cylindrical, center guide forming a housing space for the magnet in a center thereof, a cylindrical outer ring erected from the damp section, and locking pieces extending to inward from an upper part of the outer ring so as not to project over an upper end of the outer ring and an upper end of the center guide and being arranged at equal intervals in two or more places, and the clamper plate having hooks extending below to engage with the locking pieces respectively.

The outer ring may have stoppers extending vertically on an inner surface thereof near one end of the respective locking pieces, whereby rotation of the clamper plate in one direction can be prevented. Conversely, stoppers may be provided in the respective hooks to prevent the rotation of the clamper plate in one direction.

In addition, if a protrusion is formed near an outer peripheral part of the lower surface of the damper plate, shavings and contact sound due to contact with a clamper support section by small burrs caused by press punching can be prevented.

According to the invention, since the locking pieces for attaching the clamper plate do not project on the upper surface of the clamper plate, thickness of the clamper is reduced so much more for that, and reduction in thickness of the disk device can be realized.

Even if thickness of the clamper is reduced in this way, the clamper plate does not come off the hook section when the clamper plate rotates following rotation of the disk. Further, thickness of the magnet housed in the center guide is the same, and there is no change in magnetic attraction attracting the clamper to the magnetic substance on the turntable side.
Fig. 1 is a vertical sectional view showing a state in which a disk mounted on a turntable is clamped by a clamper in a disk device according to an embodiment of the invention;
Fig. 2(a) is a plan view showing a clamper body of the clamper;
Fig. 2(b) is a sectional view along line 2(b)-2(b) in Fig. 2(a) showing the clamper body;
Fig. 2(c) is a bottom view showing the clamper body;
Fig. 3(a) is a plan view showing a clamper plate of the clamper;
Fig. 3(b) is a sectional view along line 3(b)-3(b) in Fig. 3(a) showing the clamper plate;
Fig. 3(c) is a bottom view showing the clamper plate;
Fig. 4 is a vertical sectional view showing an assembly procedure for the clamper;
Figs. 5(a) to 5(c) are plan views showing an attachment procedure for the clamper plate;
Fig. 6 is an enlarged sectional view showing the clamper in a state in which the clamper plate is attached to the clamper body;
Fig. 7(a) is a plan view showing another form of the clamper plate;
Fig. 7(b) is a sectional view along line 7(b)-7(b) in Fig. 7(a) showing said another form of the clamper plate;
Fig. 7(c) is a bottom view showing the another form of the clamper plate; and
Fig. 8 is an enlarged sectional view showing a state in which the clamper is supported by a clamper support section.

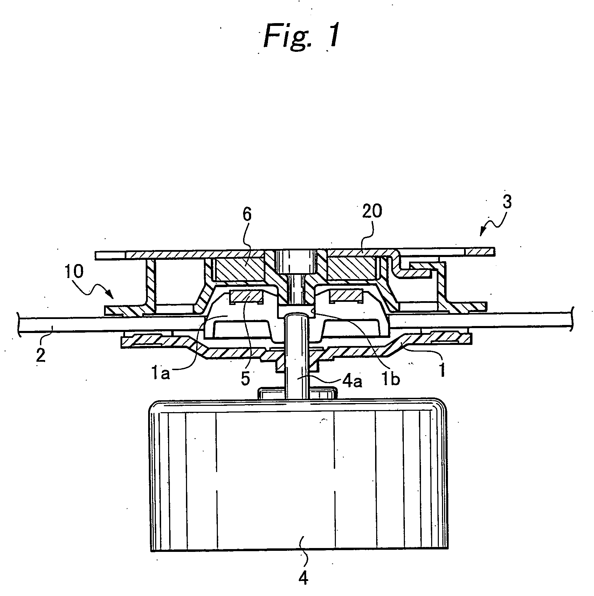

Embodiments of the invention will be hereinafter explained with reference to the accompanying drawings. Fig. 1 shows a state in which a disk 2 mounted on a tumtable 1 is damped by a clamper 3 in a disk device according to an embodiment of the invention. The turntable 1 is attached to a spindle 4a of a motor 4 so as to be driven to rotate freely. A protrusion 1 a projecting upward is formed in the center of the disc-like turntable 1, and a recess 1 b is formed in the center of an upper surface of the protrusion 1a. A magnetic substance 5 is attached in a donut-like groove formed in a peripheral part of the recess 1 b. A through-hole is formed in the center of the disk 2. The protrusion 1 a in the center of the turntable 1 fits in the through-hole, whereby the disk 2 is mounted in a fixed position on the turntable 1 correctly.

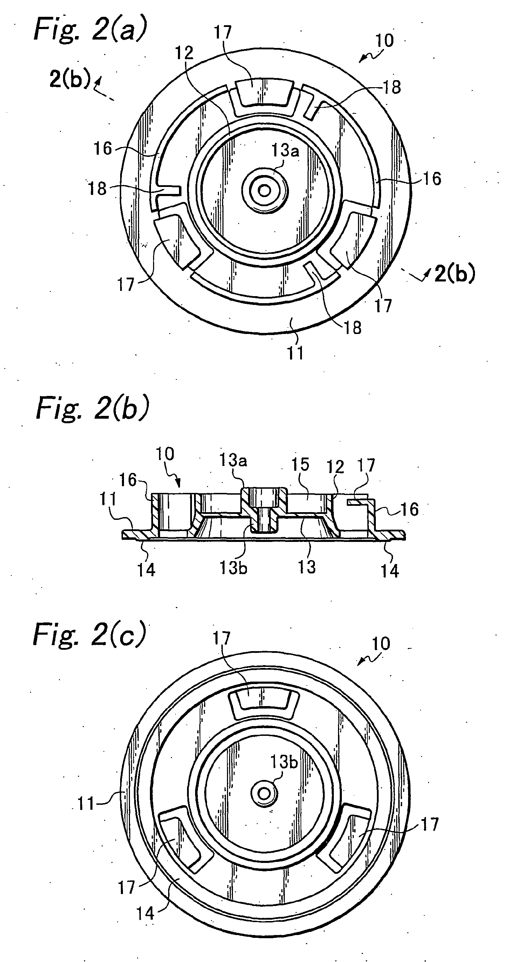

The disk 2 mounted on the turntable 1 is pressed by the clamper 3 from the upper side so as not to come off. As shown in Figs. 2(a), 2(b) and 2(c), a clamper body 10 is integrally formed of a synthetic resin material and includes a substantially disc-like clamp section 11 and a cylindrical center guide 12 in the center. A bottom plate 13 is formed in the center on the inner side of the center guide 12. There are formed in the center of the bottom plate 13 a cylindrical projection 13a projected upward and a boss 13b projected downward to fit in the recess 1b of the turntable 1. A donut-like housing space 15 for housing a magnet 6 is formed between the cylindrical projection 13a and the center guide 12. In addition, a convex ring 14 is provided on the bottom surface side of the clamp section 11 concentrically with the boss 13b.

A substantially cylindrical outer ring 16 is formed in the clamp section 11, which is erected on a concentric circle of the center guide 12. Locking pieces 17 are provided in three places at an upper end of the outer ring 16 at equal intervals extending horizontally to the inside. Here, the locking pieces 17 are formed such that upper surfaces thereof are in positions lower than the upper end of the outer ring 16. In other words, in order to reduce thickness of the entire clamper 3, the upper surfaces of the locking pieces 17 must not project higher than at least the upper end of the outer ring 16. Stoppers 18 extending vertically are provided near one-end sides of the respective locking pieces 17 on an inner side surface of the outer ring 16. In addition, the upper end of the outer ring 16 is formed at height identical with height of the upper end position of the center guide 12. A clamper plate 20 to be described later is placed on the outer ring 16 and the center guide 12.

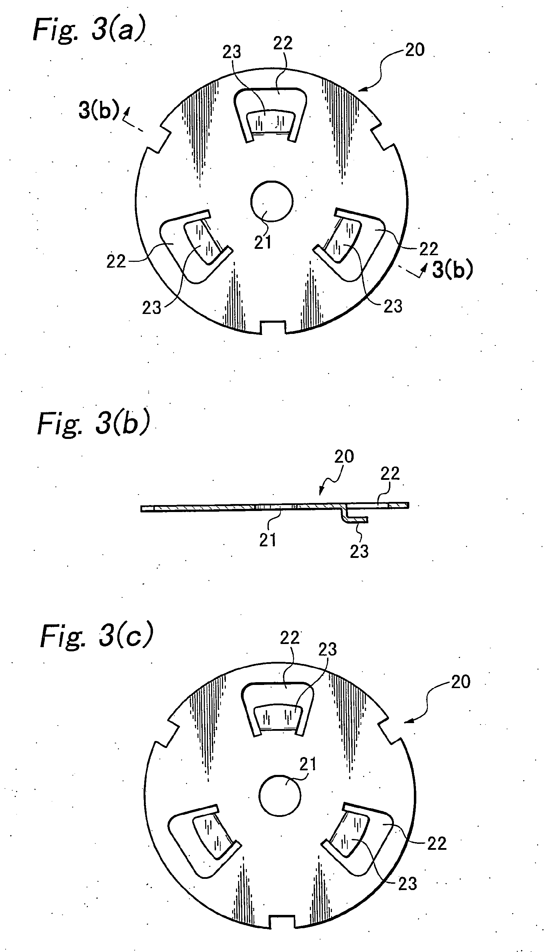

The ring-shaped magnet 6 is housed in the housing space 15 in the cylindrical center guide 12 provided in the center of the damper body 10, and the clamper plate 20 is attached so as to prevent the magnet 6 from coming off. The clamper plate 20 is a plate obtained by punching a metal magnetic substance such as an iron plate. As shown in Figs. 3(a), 3(b) and 3(c), the clamper plate 20 has a center hole 21 in the center of a circular plate. Cutout holes 22 are formed in three places corresponding to the locking pieces 17 at equal intervals with the center hole 21 as a center. L-shaped hooks 23 extending outward from the inside are formed in the respective cutout holes 22. Here, the hooks 23 bend to extend to the lower side of the cutout holes 22 such that upper surfaces of the hooks 23 engage with lower surfaces of the locking pieces 17 (see Fig. 3(b)).

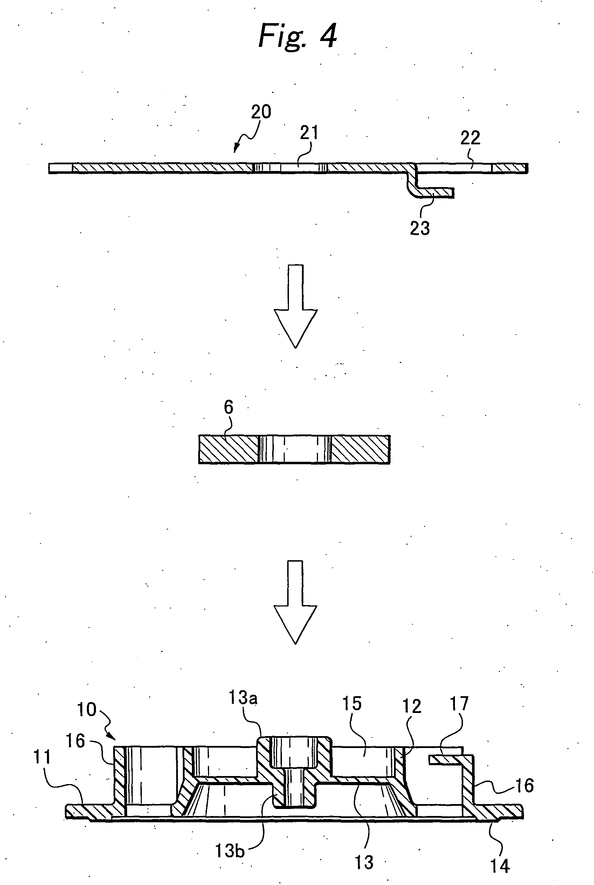

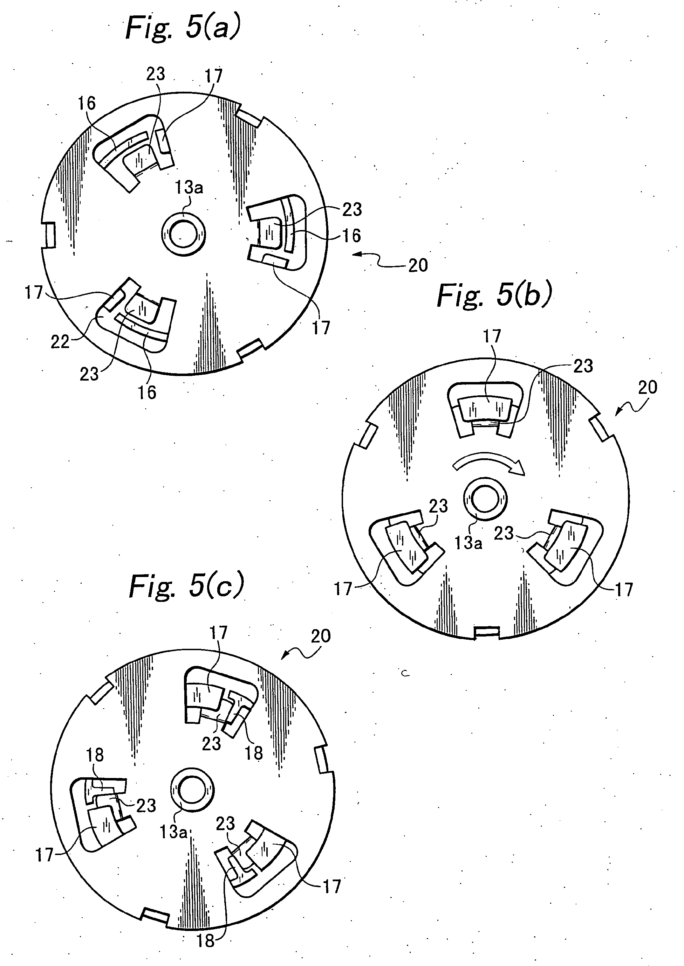

Fig. 4 shows an assembly procedure for a clamper. The magnet 6 is housed in the housing space 15 of the clamper body 10, and the clamper plate 20 is attached over the magnet 6. In other words, the clamper plate 20 is placed on the outer ring 16 such that the hooks 23 are located in positions beside the locking pieces 17 where the stoppers 18 are not set. At this point, the hooks 23 are placed so as to fit in the inside of the outer ring 16 and to be located between the respective locking pieces 17 (see Fig. 5(a)).

Subsequently, as shown in Fig. 5(a), when the damper plate 20 is rotated in a clockwise direction (arrow direction), the hooks 23 crawl under the locking pieces 17, respectively. When the clamper plate 20 is further rotated in the clockwise direction, the hooks 23 come into abutment against the stoppers 18 extending vertically on the inner surface of the outer ring 16 and stop. In other words, since the clamper plate 20 cannot rotate any more, the hooks 23, which are locked once, never come off the locking pieces 17.

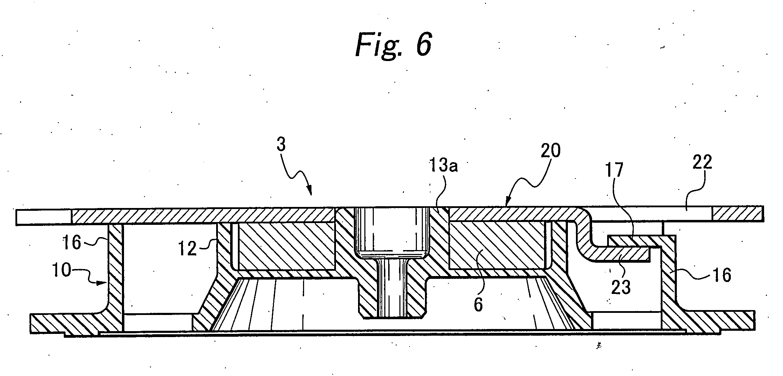

Fig. 6 shows a state in which the clamper plate 20 is attached to the clamper body 10. The hook 23 is locked under the locking piece 17 extending horizontally to the inside from the outer ring 16, and the locking piece 17 does not project on the upper surface of the clamper plate 20. In such a state, even if a disk mounted on the turntable is clamped from the upper side to rotate the turntable with the disk, the clamper plate 23 touches the stoppers 18 and never comes off.

Incidentally, although the stoppers 18 are provided on the clamper body 10 side in this embodiment, stoppers may be formed in the hooks 23 on the clamper plate 23 side. In addition, it is also possible that the hooks 23 are made excellent in a spring property and locked by the locking pieces 17 with an increased frictional force to obtain a locked state that does not require the stoppers 18.

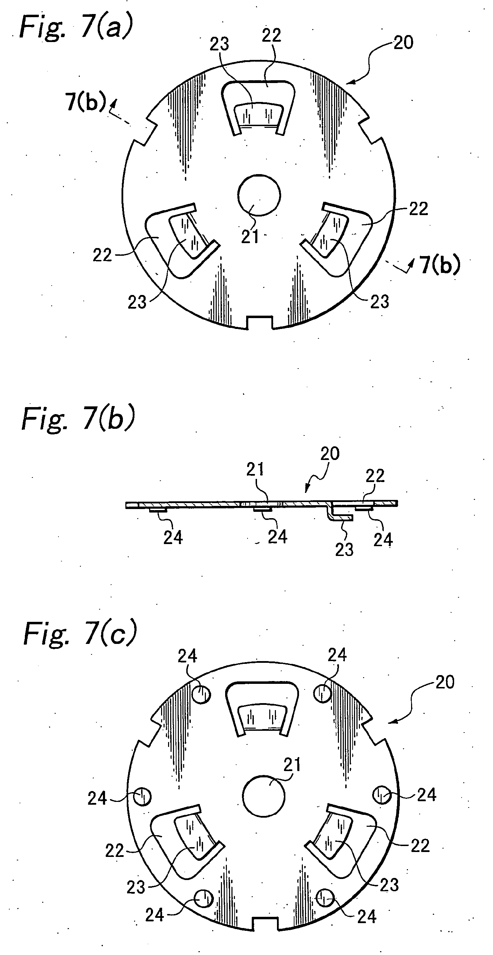

Figs. 7(a), 7(b) and 7(c) show another embodiment of the clamper plate 20. The clamper plate 20 in this embodiment identical with the clamper plate 20 shown in Figs. 3(a), 3(b) and 3(c) except that plural small protrusions 24 are provided on the lower surface of the clamper plate 20 near the outer periphery thereof. The protrusions 24 are provided at equal intervals with the center hole 21 as a center. The clamper plate 20 is punched from a metal plate by a mold. However, burrs are caused on a punched surface and come into contact with a clamper support section provided in a cabinet to form shavings. The shavings may contaminate the inside of an apparatus as a foreign substance. In addition, contact sound is caused when the clamper plate comes into contact with the clamper support section. Therefore, the protrusions 24, which are higher than the burrs caused on the punched surface, are press-molded.

Here, the number of protrusions is not specifically limited and a shape thereof is arbitrary as long as the burrs do not come into contact with a clamper support section 30.

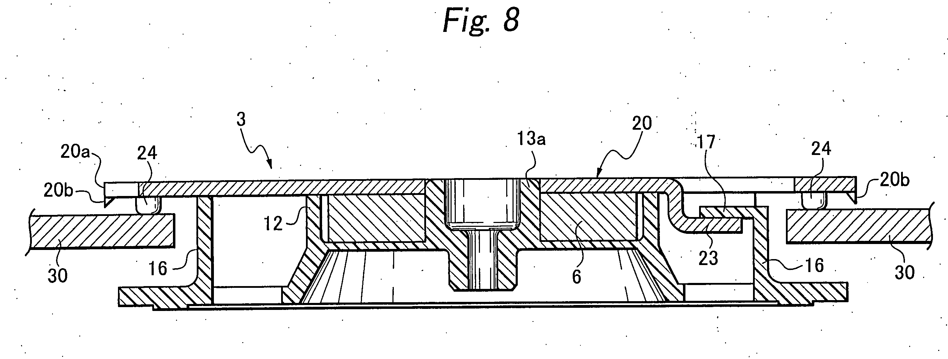

Fig. 8 shows a state in which the clamper body 10 is supported by the clamper support section 30. The protrusions 24 formed on the lower surface of the damper plate 20 are in contact with the clamper support section 30. Although small burrs 20b are caused on a punched surface 20a of the clamper plate 20, the burrs 2b never come into contact with the clamper support section 30.

Since the clamper plate 20 is constituted as described above, the clamper plate 20 can be attached with a one-touch operation, and a thin clamper is realized while the locking pieces 17 do not project above the clamper plate 20.

## Claims

1. A disk device equipped with a thin clamper comprising a turntable (1) and a clamper (3) in which a disk (2) is mounted on the turntable and pressed and clamped by the damper, wherein the clamper (3) including a clamper body (10) integrally formed of synthetic resin, a magnet (6), and a clamper plate (20) made of a metal magnetic substance, **characterized in that**
the clamper body (10) having a disc-like clamp section (11) to press the disk, a cylindrical center guide (12) forming a housing space (15) for the magnet in a center thereof, a cylindrical outer ring (16) erected from the clamp section, and locking pieces (17) extending to inward from an upper part of the outer ring so as not to project over an upper end of the outer ring and an upper end of the center guide and being arranged at equal intervals in two or more places, and
the clamper plate (20) having hooks (23) extending below to engage with the locking pieces (17) respectively.

2. A disk device equipped with a thin clamper according to claim 1,
wherein the outer ring (16) has stoppers (18) extending vertically on an inner surface thereof near one end of the respective locking pieces (17) to prevent rotation of the clamper plate (20) in one direction.

3. A disk device according to claim 1 or 2,
wherein the hooks (23) have stoppers to prevent rotation of the clamper plate (20) in one direction.

4. A disk device equipped with a thin clamper according to claim 1, 2, or 3, wherein a protrusion (24) is formed near an outer peripheral part of the lower surface of the clamper plate (20).
